Europäisches Patentamt

(19) European Patent Office

Office européen des brevets

(11) Publication number: **0 102 081**
**B1**

(12) **EUROPEAN PATENT SPECIFICATION**

(45) Date of publication of patent specification: **20.07.88**

(21) Application number: **83108529.5**

(22) Date of filing: **30.08.83**

(51) Int. Cl.⁴: **A 23 G 3/30**

(54) **Reduced-shrink bubble gum and method for preparing same.**

(30) Priority: **30.08.82 US 413053**

(43) Date of publication of application:
**07.03.84 Bulletin 84/10**

(45) Publication of the grant of the patent:
**20.07.88 Bulletin 88/29**

(84) Designated Contracting States:
**AT BE CH DE FR GB IT LI NL SE**

(56) References cited:
**DE-A-3 036 203**
**FR-A-1 334 938**
**GB-A-2 052 945**
**GB-A-2 084 845**
**US-A-2 076 112**
**US-A-2 288 100**
**US-A-2 525 072**
**US-A-3 075 884**
**US-A-3 995 064**
**US-A-4 187 320**
**US-A-4 317 837**
**US-A-4 329 369**
**US-A-4 357 354**
**US-A-4 370 350**

(73) Proprietor: **NABISCO BRANDS, Inc.**
**Nabisco Brands Plaza**
**Parsippany New Jersey 07054 (US)**

(72) Inventor: **Puglia, Wayne J.**
**22 Oak Point Drive**
**Bayville New York (US)**
Inventor: **Kehoe, Gary**
**31 Crest Road**
**Ridgefield Connect (US)**
Inventor: **Clark, Warren**
**14 Eastview Avenue**
**Brewster N.Y. (US)**

(74) Representative: **Brauns, Hans-Adolf, Dr. rer. nat.**
**et al**
**Hoffmann, Eitle & Partner, Patentanwälte**
**Arabellastrasse 4**
**D-8000 Munich 81 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**Description**

The present invention relates to the art of chewing gum composition and, in particular, to a novel chewing gum composition having improved softness, good film-forming attributes, and decreased shrink characteristics.

Chewing gum compositions, as they are known today, generally comprise a water-soluble flavor portion which is dissipated over a period of time by chewing, and a base portion which is insoluble and inert, and is retained in the oral cavity throughout mastication. Depending on the desired effect of the ultimate chewing gum product, the different portions are composited with components having characteristics necessary to achieve the desired gum product.

The base portion, for example, usually comprises primarily an elastomeric component, which can be either natural or synthetic, or a combination thereof, and a resinous component. Elastomers provide the insoluble portion with resiliency for continuous recovery from deformation caused by chewing, and the resin provides the cud with uniform plasticity. These components must be compatibilized in order to produce a single homogeneous cud which has the desired properties throughout. This thoroughly mixed physical state is not always easily achieved because of the relative immiscibility of certain elastomers and resins. In order to overcome problems of compatibility, certain unique plasticizers may be used to enhance the homogeneity attainable in a gum base.

Another component which may be included in the gum base is an inert inorganic filler component such as calcium carbonate, talc (3MgO 4SiO$_2$ H$_2$O), magnesium carbonate, etc. which is included in amounts up to about 40% by weight of the gum base. (Unless otherwise indicated all percentages used herein refers to percent by weight). Since filler material is, in form, a particulate, inclusion of such material in gum base causes discontinuity thereby limiting the amount which can be incorporated into the base without causing separation of the cud upon chewing.

For example, U.S. Patent No. 3,984,574 to Comollo discloses a gum base including polyisobutylene in combination with polyvinyl acetate which requires additional components such as hydrogenated or partially hydrogenated vegetable oils or animal fats in an amount of 5—50% of the base, and filler in an amount of 5—40% of the base. Inasmuch as the gum base normally represents no more than about 25%—30% of the total gum composition, the amount of filler present in the overall chewing gum composition would be no more than about 12%, and would normally be about 7.0%.

The soluble portion of the chewing gum composition comprises other sweeteners, flavorants, and colorants. Upon chewing the gum composition, these components are solubilized and digested, leaving a cud volume of only about 30% the original size of the intial unit of chewing gum. Consequently, the consumer is left with an unsatisfactory reduced-size piece of gum which, because of the loss of sweeteners, rapidly hardens.

Attempts to overcome this disappointing loss of cud volume in chewing gum have not been entirely successful. Increasing the amount of insoluble gum base in proportion to the soluble portion results in a commensurate reduction in the amount of sugar in the gum composition which then requires the use of expensive intensive sweeteners to maintain the overall sweetness level.

In U.S. Patent No. 4,252,830 to Kehoe, et al. a substantially calorie-free chewable flavored chewing gum base essentially free of water-soluble components is disclosed which includes inert fillers in amounts of at least 50% by weight up to 85% or more and at least 10% by volume of entrapped air voids. The overall gum composition of Kehoe, et al., however, does not include sugar and, consequently, must include an intense sweetener. Furthermore, there is no indication in the Kehoe, et al. patent that the styrene-butadiene base disclosed therein has good film-forming capabilities while maintaining a soft texture.

GB—A—2 084 845 discloses a flavored chewing gum having a prolonged sweet taste comprising gum base, a non-sugar sweetener and an inorganic filler. The non-sugar sweetener is co-dried or coated on the filler to form a non-sugar sweetener-filler combination and said non-sugar sweetener is present in the chewing gum in an amount of from 0.2 to 3% by weight of said gum base and said filler, which is part of said combination, is present in an amount of from 5 to 95% by weight of said gum base. The examples in said document do not disclose chewing gum compositions containing up to 95% filler (calculated on the gum base) and there is no teaching in said document, how to obtain reduced shrink chewing gum.

In accordance with the present invention, a chewing gum composition having good film-forming characteristics and a reduced shrink being based essentially on an inert inorganic filler containing gum base is provided. The composition is characterized in that it comprises 14% to 35% inert inorganic filler based on the total weight of the gum composition and a non-styrene butadiene gum base in an amount of from 16% to 30% by weight of the gum composition.

The filler included in the gum composition as a component of the gum base and as a component is added after formation of the gum base. The present invention also provides a method of preparing a reduced-shrink chewing gum composition having good film-forming characteristics characterized by preparing a filler containing non-styrene butadiene base in an amount sufficient to comprise 16 to 30% by weight of the gum composition and adding thereto additional filler and non-filler components to provide a resulting chewing gum composition containing from 14 to 35% filler by weight of the gum composition.

Fillers suitable for use in the present chewing gum composition include, but are not limited to, calcium carbonate, aluminum hydroxide, alumina, magnesium carbonate, dicalcium phosphate, talc (3MgO 4SiO$_2$

2

**0 102 081**

H₂O), magnesium trisilicate, magnesium hydroxide, aluminum silicates, and silica gel. Calcium carbonate is preferred. However, where acid flavors and/or acid sweeteners, such as the free acid form of saccharin, acid cyclamate or Aspartame R are employed in the final chewing gum it is preferred to employ a non-chalk filler, preferably talc.

The gum base includes non-SBR type masticatory substances of synthetic origin, such as polyisobutylene, polyisoprene, isobutylene-isoprene copolymer, polyvinyl acetate, polyethylene, petroleum wax, as well as masticatory substances of natural origin such as rubber latex solids, chicle, crown gum, nispero, rosidinha, jelutong, pendare, perillo, niger gutta, tunu, etc. This elastomer or masticatory substance is preferably employed in an amount within the range of from 5% to 20% by weight of the gum base.

The water-insoluble gum base may consist of any of the various bases disclosed for example in U.S. Patent Nos. 3,052, 552 and 2,197,719. Typical ingredients included in gum base compositions are the following:

|  | Parts by Weight |
|---|---|
| **Base 1** | |
| Ester gum | 88 |
| Rubber latex solids | 10 |
| Lecithin | 2 |
| **Base II** | |
| Chicle | 30 |
| Jelutong | 60 |
| Gutta soh | 8.5 |
| Lecithin | 2 |
| **Base III** | |
| Partially oxidized chicle | 98 |
| Lecithin | 2 |
| **Base IV** | |
| Jelutong (dry) | 80 |
| Gutta siak | 18 |
| Lecithin | 2 |

In addition, the gum base includes plasticizers for the masticatory gum base components such as glyceryl triacetate, acetylated monoglyceride, benzyl benzoate, benzyl butyrate, benzyl phenyl acetate, butyl-2-decenoate, citronellyl butyrate, cresyl acetate, ethyl acetate, diethyl malonate, diethyl sebacate, triethyl citrate, diethyl succinate, glyceryl tributyrate, ethyl laurate, ethyl acetoacetate, diethyl tartrate, ethyl or butyl lactate, acetyl triethyl citrate, diethyl malate, ethyl oleate, sucrose octaacetate, diacetyl tartaric acid ester of mono and diglycerides, stearyl monoglyceridyl citrate, castor oil, succinylated monoglycerides, lactylic and glyceryl lacto esters of fatty acids, or combinations thereof, with the glyceryl triacetate and acetylated monglyceride combination being preferred, in an amount of from 2% to 15% of the gum base.

The gum base can also include waxes which serve as lubricants and should have a melting point of above about 35°C and preferably above about 50°C. Examples of such waxes include candelilla wax, carnauba wax, ozokerite, oricury, microcrystalline wax, refined paraffin wax and the like. The waxes are employed in an amount within the range of from about 0 to about 18% by weight of the gum base, and preferably from 3 to 12%. The preferred waxes are microcrystalline wax and paraffin wax employed in combination so that from 0 to 18% (based on the weight of the gum base) of the microcrystalline wax is employed with from 0 to 18% (based on the weight of the gum base) of the paraffin wax. The waxes are found to reduce the tackiness of the final gum composition without significantly reducing cohesivity thereof.

3

An emulsifier can also be included to impart hydrophilic/hydrophobic balance to the gum base so that saliva will be absorbed thereby making the gum base slippery; the emulsifier will be employed in amounts ranging from 0 to 10% by weight of the gum base, and preferably from about 3 to about 9%. Examples of such emulsifiers include glyceryl monostearate, phosphatides, such as lecithin and cephalin, Tweens, Spans and mixtures thereof.

In addition, the gum base can include colorants/pigments, such as titanium dioxide, and anti-oxidants (when necessary to stabilize non-inventive ingredients) in an amount up to 1000 ppm of the gum base, such as butylated hydroxyanisole, butylated hydroxy toluene, and propyl gallate.

The following is a general gum base formulation in accordance with the present invention.

| Component | % by Weight of Gum Base |
|---|---|
| Elastomer — Polyisobutylene, Polyisoprene, Isobutylene-Isoprene Copolymer, etc. | 5% to 20% |
| Resin — Polyvinyl Acetate | 2% to 25% |
| Natural Masticatory Substance | 0 to 5% |
| Plasticizer — Triacetin, acetylated monoglyceride, polylimonene, petrolatum, etc. | 1% to 50% |
| Filler — $CaCO_3$, Talc, etc. | 20% to 35% |
| Waxes | 0 to 18% |
| Texturizing/Emulsifying agents | 0 to 10% |

In any event, the gum bases useful in the present invention can be preformed before forming a chewing gum, and will be present in an amount within the range of from 10 to 40% and preferably from 15 to 30% by weight of the chewing gum.

The chewing gum of the invention may be of the sugar-containing or sugarless variety. Examples of sweeteners which may be employed include sugars, for example, monosaccharides, of 5 or 6 carbon atoms, such as arabinose, xylose, ribose, glucose, mannose, galactose, fructose, dextrose, or sorbose or mixtures of two or more of the foregoing monosaccharides; disaccharides, for example, sucrose, such as cane or beet sugar, lactose, maltose or cellobiose; polysaccharides, such as partially hydrolyzed starch or dextrin, as well as sugar alcohols, such as sorbitols, mannitol, xylitol, mixtures thereof, as well as hydrogenated starch hydrolysates or isomaltitol, and mixtures of two or more of the above sugars and/or sugar alcohols.

Any of the above sugars may be present in an amount of within the range of from 30% to 70% and preferably from 55% to 65% by weight of the chewing gum. The sugar alcohols, where present, will also be employed in an amount of from 30% to 70% and preferably from 55% to 65% by weight of the chewing gum.

Surprisingly, the amount of sugar employed in the gum composition of the present invention can be reduced by about 15—25% of the amount normally employed without detracting from the level of sweetness of the gum composition.

While it is not necessary to use intense sweeteners to maintain adequate sweetness, the chewing gum of the invention may also contain in lieu of or in addition to any of the above sugars or sugar alcohols an artificial sweetener, such as, for example, Aspartame R, cyclamate, or a saccharin or other sweetener as set out hereinafter, the artificial sweetener being present in an amount of from 0 to 1.5% by weight, and preferably, from 0.05 to 0.3% by weight of the chewing gum.

Examples of artificial and natural sweeteners which may be employed herein include sodium, calcium or ammonium saccharin salts, dihydrochalcones, glycyrrhizin, dipotassium glycyrrhizin, glycyrrhizic acid ammonium salt, L-aspartyl-L-phenylalanine methyl ester (aspartame), the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), as well as *Thaumatococcus daniellii* (Thaumatin I and II), *Stevia rebaudiana* (stevioside), *Richardella dulcifica* (Miracle Berry), *Dioscoreophyllum cumminsii* (Serendipity Berry), cyclamate salts, and the like or mixtures of any two or more of the above.

The chewing gum of the invention may include flavoring, such as sour or fruit flavoring or non-acid or mint flavoring in an amount ranging from 0.5 to 2% by weight of the final chewing gum product. The flavoring may comprise synthetic flavors and oils derived from plants, leaves, flowers, fruit, etc. Representative fruit flavor adjuncts include acids, such as adipic, citric, succinic and fumaric acid, and citrus oils, such as lemon oil, orange oil, lime oil, grapefruit oil, and fruit essences, such as apple essence, pear essence, peach essence, strawberry essence, apricot essence, raspberry essence, cherry essence, plum essence, pineapple essence, as well as the following essential oils: peppermint oil, spearmint oil, mixtures of peppermint oil and spearmint oil, clove oil, bay oil, anise oil, eucalyptus oil, thyme oil, cedar leaf oil, cinnamon oil, oil of nutmeg, oil of sage, oil of bitter almonds, cassia oil, and methylsalicyclate (oil of wintergreen). Various synthetic flavors, such as mixed fruit, may also be incorporated in the chewable gum base with or without conventional preservatives.

Finally, an additional amount of inert inorganic filler is also included in the normally water-soluble components added to the preformed gum base. The amount of additional filler material added with the water-soluble components can be from 10% to 30% by weight based on the weight of the chewing gum composition, thereby raising the overall amount of filler to from 14% to 35% by weight of said gum composition, and preferably from 16% to 25%.

The following is a general chewing gum composition formula in accordance with the present invention.

| Component | % by Weight of Chewing Gum Composition |
|---|---|
| Gum Base in Accordance With the Invention | 16% to 30% |
| Sugar Pulverized | 35% to 55% |
| Corn Syrup | 0 to 15% |
| Filler | 10% to 30% |
| Flavor | 0.2 to 3% |
| Emulsifiers | 0 to 4% |
| Color | 0 to 2% |
| Intense Sweeteners | 0 to 1.5% |
| Sugar Alcohol(s) | 0 to 15% |

Traditionally, cud volume, or insoluble base materials remaining after extraction of soluble ingredients, has been considered as one measure of chewing gum acceptability. In the case of bubble gums, cud volume is critical since it determines the size of bubbles and, to some extent, the ease with which they may be blown. Cud volume can be determined by the difference in weight of a gum cud in air and in a liquid of known density. Typically, a piece of bubble gum weighing 8.14 grams and having a volume of 6.54 cm$^3$ yields a cud volume of about 2.26 cm$^3$ after chewing for ten minutes, which is a 65.4% volume loss. A sample of bubble gum weighing 8.23 grams produced in accordance with the present invention, and having an initial volume 6.26 cm$^3$, yields a cud volume of 3.99 cm$^3$ after ten minutes of chewing — a volume loss of only 36.3%. See Table I.

TABLE I

|  | Typical Bubble Gum | Bubble gum of the Invention |
|---|---|---|
| Piece Weight | 8.14 gm | 8.23 gm |
| Cud Weight (After 10 minutes of Chewing) | 2.37 gm | 4.18 gm |
| Piece Volume | 6.54 cm$^3$ | 6.26 cm$^3$ |
| Cud Volume (After 10 minutes of Chewing) | 2.26 cm$^3$ | 3.99 cm$^3$ |
| Volume Loss | 65.4% | 36.3% |

Liquid used to measure change in volume was n-butylphthalate which has a density of 1.048 gm/cm$^3$.

The present chewing gum composition not only possesses superior film-forming properties but also a significant reduced-shrink feature by which the size of the insoluble cud remaining after mastication is sustained at from about 60% to about 70% by volume of the original size of a unit of chewing gum produced with the composition. This is compared to the normal cud volume of from about 30% to about 37% of original gum unit size remaining after masticating the water-soluble components out of chewing gum, an increase of about 50%.

Furthermore, the sweetness perception of the present chewing gum composition is maintained at the same level as chewing gum containing approximately 10—20% more water soluble or non-intense sweetener.

Another desirable attribute of the present invention is that the resulting chewing gum is initially very soft, and remains very soft after sustained chewing which is unexpected in view of the fact that increased filler levels in polymeric compositions have in the past been associated with increased hardness.

In a preferred embodiment, the chewing gum of the present invention is ideal for a coextruded gum product. Specifically, the soft gum herein can be coextruded as a core portion, thus rendering the overall product softer and capable of retaining high cud volume.

For a better understanding of the present invention, together with other and further objects, reference is made to the following descriptions of specific examples and its scope will be pointed out in the appended claims.

## EXAMPLES OF THE INVENTION

The chewing gum of the present invention was prepared in accordance with the following formulae.

### GUM BASE

| Component | % by Weight of Gum Base |
|---|---|
| Polyisobutylene Elastomer | 12.5% |
| Resins: Polyvinyl Acetate (M.W. 20,000-40,000) | 32.5% |
| Plasticizers — e.g., Polylimonine, Glyceryl, Triacetate, and Acetylated Monoglyceride | 15.25% |
| Calcium Carbonate (CaCO$_3$) Filler | 29.5% |
| Waxes | 10.50% |

CHEWING GUM COMPOSITION

| Component | % by Weight of Chewing Gum Composition |
| --- | --- |
| Gum Base (as described immediately above) | 22.50% |
| Sugar Pulverized | 51.0% |
| High Fructose Corn Syrups 90 DE | 4.0% |
| Sorbitol Syrup | 8.0% |
| Calcium Carbonate ($CaCO_3$) Filler | 13.5% |
| Flavor | 0.8% |
| Color | 0.1% |

In order to prepare the base the ingredients were mixed in a sigma-blade mixer a temperature of about 120°C by introducing the polyisobutylene elastomer along with a portion of an appropriate plasticizer, followed by a first portion of the polyvinyl acetate and the filler. More plasticizer was then added with the remaining polyvinyl acetate, filler, as well as the wax.

The gum base prepared as described above was then melted in a mixer at 91°C (160°F) and a small portion of the pulverized sugar, high fructose syrup, and filler were added with mixing over a period of 4—6 minutes. Thereafter, the remaining ingredients were added according to conventional chewing gum making practice to form a reduced-shrink, soft bubble gum having an excellent film-forming property as well as good sweetness perception.

In order to demonstrate the unexpected results relative to producing a soft high-filler content chewing gum by use of the present invention, tests were conducted on samples of the gum produced in accordance with the previous Example. One type of test which can be made to determine softness is a test measuring the degree of hardness, i.e., resistance of a material to local deformation. Hardness tests usually result in measurements indicating the depth of penetration of an indentor or probe under a specific set of conditions.

Hardness was measured on a Thwing-Albert Electronic Tensile Tester Model Q.C. II, specially modified to measure compression of chewing gum. The chewing gum sample was placed between two metal plates measuring 2.54 × 3.18 cm (1″ × 1¼″). The gum, originally 1.27 cm (½″) in thickness was compressed to one-half of its original thickness or 0.64 cm (¼″) at a speed of 50.8 cm/min (20 in/min). These tests were conducted at room temperature (24.5°C) using a 45.4 kg (100 lb) capacity load cell. The measurement obtained was the peak force in N (in lbs) required to compress a chewing gum sample aged three-months to one half of its original thickness.

TABLE I
Compression Test
Peak force N (lbs) required to compress
sample to ½ original thickness

| Sample | Control* | Reduced-shrink Bubble gum |
|--------|----------|----------------------------|
| A | 158.4 (35.4) | 130.7 (29.2) |
| B | 151.3 (33.8) | 117.3 (26.2) |
| C | 180.4 (40.3) | 123.1 (27.5) |
| D | 174.5 (39.0) | 132.9 (29.7) |
| E | 156.7 (35.2) | 150.0 (25.7) |
| Avg. | 164.4 (36.74) | 123.8 (27.66) |

*24% Base which includes 30% filler
58% Sugar
17% Corn Syrups
0.8% Flavor
0.1% Color

As evident from the data, the samples exhibited readings which were 24.7% softer than the control products.

Perception testing was also conducted in order to determine how the chewing gum of the invention compared to a similar non-SBR low filler chewing gum. The formula of the comparative gum composition was as follows:

COMPARISON GUM BASE

| Component | % by Weight |
|-----------|-------------|
| Polyisobutylene Elastomer | 12.5% |
| Resins | 32.5% |
| Plasticizers/Waxes/etc. | 25.75% |
| Filler | 29.25% |

COMPARISON CHEWING GUM COMPOSITION

| | |
|---|---|
| Gum Base | 24% |
| Sugar Pulverized | 58% |
| Corn Syrups | 17% |
| Flavor | 0.8% |
| Color | 0.1% |

The results of these tests, which were conducted on a sample population of 186 persons, are shown below in Table II.

8

# 0 102 081

## TABLE II

| | Chewing Gum of the Invention (%) | Comparison Chewing Gum (%) |
|---|---|---|
| Initial Softness | 54 | 46 |
| Larger Bubble-Blowing Characteristics | 53 | 47 |
| Easier Bubble-Blowing | 55 | 45 |
| Long Lasting Softness | 56 | 44 |
| Long Lasting Flavor | 53 | 47 |
| Better Initial Chew | 52 | 48 |
| Size Retention | 58 | 42 |

These results clearly show that comparable quality chewing gum is achieved by use of the present invention wherein inexpensive filler can be used to replace a portion of the sugar content.

The same chewing gum composition as outlined above may be prepared utilizing other non-SBR type bases, such as polyisoprene, isobutylene-isoprene copolymer, alone or in combination with each other or with elastomers of natural origin as previously described herein.

**Claims for the Contracting States BE CH DE FR GB IT LI LU NL SE**

1. A chewing gum composition having good film-forming characteristics and a reduced shrink being based essentially on an inert inorganic filler containing gum base, characterized in that said chewing gum composition comprises 14% to 35% inert inorganic filler based on the total weight of the gum composition and a non-styrene butadiene gum base in an amount of from 16% to 30% by weight of the gum composition.

2. The chewing gum composition of claim 1, wherein the filler is present in an amount of from 16% to 25% of said gum composition.

3. The chewing gum composition of claim 1 or 2, wherein the filler is selected from calcium carbonate, aluminum hydroxide, alumina, magnesium carbonate, dicalcium phosphate, talc ($3MgO \cdot 4SiO_2 \cdot H_2O$), magnesium trisilicate, magnesium hydroxide, aluminum silicate or silica gel.

4. The chewing gum composition of claim 3, wherein the filler is calcium carbonate.

5. The chewing gum composition of any of claims 1 to 4, wherein the base is a non-styrene butadiene gum base selected from polyisobutylene base, polyisoprene base or isobutylene-isoprene copolymer base.

6. The chewing gum composition of claim 5, wherein the base is polyisobutylene base.

7. The chewing gum composition of any of claims 1 to 6, wherein the gum base further comprises other masticatory substances of natural origin, selected from rubber latex solids, chicle, crown gum, nispero, rosidinha, jelutong, perdare, perillo, niger gutta or tunu.

8. The chewing gum composition of any of Claims 1 to 7 wherein the components added after formation of the gum base further comprise a sweetener selected from sugar, hydrogenated starch hydrolysates, sugar alcohols or corn syrup, in an amount of from 35% to 70% by weight based on the weight of said gum composition.

9. The chewing gum composition of any of Claims 1 to 7 which further comprises intense sweeteners of artificial or natural origin.

10. The chewing gum composition of any of Claims 1 to 9 wherein the filler is included in the base in an amount from 20% to 35% by weight based on the weight of the base.

11. The chewing gum composition of any of Claims 1 to 10 wherein the filler being included in the gum composition as a component added after formation of the base comprises 10% to 30% by weight based on the weight of said gum composition.

12. The chewing gum composition of any of Claims 1 to 11 wherein the resultant composition is in the form of a coextruded gum product.

13. The chewing gum composition of any of Claims 1 to 11 wherein the composition is the core portion of a coextruded gum.

14. A method of preparing a reduced-shrink chewing gum composition having good film-forming characteristics characterized by preparing a filler containing non-styrene butadiene base in an amount sufficient to comprise 16 to 30% by weight of the gum composition and adding thereto additional filler and non-filler components to provide a resulting chewing gum composition containing from 14 to 35% filler by weight of the gum composition.

9

15. A method according to Claim 14 wherein the base contains from 20 to 35% filler by weight of the base.

16. A method according to Claim 14 or 15 wherein the additional filler being added after preparing the gum base comprises 10 to 30% by weight of the gum composition.

17. A chewing gum composition of any of claims 1 to 13, in which a force of no more than 133.34 N (30 lbs) is required to compress a sample at room temperature (24.5°C) at a speed of 50.8 cm/min (20 in/min) to one-half of its original size from originally 1.27 cm (1/2 inch) thickness to a thickness of 0.635 cm (1/4 inch).

## Claims for the Contracting State AT

1. A method of preparing a reduced-shrink chewing gum composition having good film-forming characteristics characterized by preparing a filler containing non-styrene butadiene base in an amount sufficient to comprise 16 to 30% by weight of the gum composition and adding thereto additional filler and non-filler components to provide a resulting chewing gum composition containing from 14 to 35% filler by weight of the gum composition.

2. A method according to Claim 1 wherein the base contains from 20 to 35% filler by weight of the base.

3. A method according to Claim 1 or 2 wherein the additional filler being added after preparing the gum base comprises 10 to 30% by weight of the gum composition.

4. The method of any of Claims 1 to 3 in which a force of no more than 133.34 N (30 lbs) is required to compress a sample at room temperature (24.5°C) at a speed of 50.8 cm/min (20 in/min) to one-half of its original size from originally 1.27 cm (1/2 inch) thickness to a thickness of 0.635 cm (1/4 inch).

## Patentansprüche für die Vertragsstaaten: BE, CH, LI, DE, FR, GB, IT, LU, NL, SE

1. Kaugummi-Zusammensetzung mit guten Filmbildungseigenschaften und einem verringerten Schrumpf, die im wesentlichen auf einer einen inerten anorganischen Füllstoff enthaltenden Gummigrundmasse aufgebaut ist, dadurch gekennzeichnet, dass die Kaugummi-Zusammensetzung 14 bis 35% inerten anorganischen Füllstoff, bezogen auf das Gesamtgewicht der Gummi-Zusammensetzung, und eine Nicht-Styrol-Butadien-Gummigrundmasse in einer Menge von 16 bis 30 Gew.% der Gummi-Zusammensetzung umfasst.

2. Kaugummi-Zusammensetzung gemäss Anspruch 1, in welcher der Füllstoff in einer Menge von 16 bis 25% der Gummi-Zusammensetzung vorliegt.

3. Kaugummi-Zusammensetzung gemäss Anspruch 1 oder 2, in welcher der Füllstoff aus Calciumcarbonat, Aluminiumhydroxid, Aluminiumoxid, Magnesiumcarbonat, Dicalciumphosphat, Talkum (3MgO $4SiO_2 H_2O$), Magnesiumtrisilicat, Magnesiumhydroxid, Aluminiumsilicat oder Kieselgel ausgewählt ist.

4. Kaugummi-Zusammensetzung gemäss Anspruch 3, in welcher der Füllstoff Calciumcarbonat ist.

5. Kaugummi-Zusammensetzung gemäss einem der Ansprüche 1 bis 4, in welcher die Nicht-Styrol-Butadien-Gummigrundmasse aus Polyisobutylen-Grundmasse, Polyisopren-Grundmasse oder Isobutylen-Isopren-Copolymer-Grundmasse ausgewählt ist.

6. Kaugummi-Grundmasse gemäss Anspruch 5, in welcher die Grundmasse Polyisobutylen-Grundmasse ist.

7. Kaugummi-Zusammensetzung gemäss einem der Ansprüche 1 bis 6, in welcher die Gummigrundmasse weiterhin andere Mastikatorsubstanzen natürlichen Ursprungs, ausgewählt aus Kautschuklatex-Festteilen, Chicle, Kronengummi, Nispero, Rosidinha, Jelutong, Perdare, Perillo, Niger gutta oder Tunu, enthält.

8. Kaugummi-Zusammensetzung gemäss einem der Ansprüche 1 bis 7, in welcher die Komponenten, die nach der Bildung der Gummigrundmasse zugegeben werden, weiterhin ein Süssungsmittel, ausgewählt aus Zucker, hydriertem Stärkehydrolysat, Zuckeralkoholen oder Maissirup, in einer Menge von 35 bis 70 Gew.%, bezogen auf das Gewicht der Gummi-Zusammensetzung, umfassen.

9. Kaugummi-Zusammensetzung gemäss einem der Ansprüche 1 bis 7, welche weiterhin ein Intensivsüssungsmittel künstlichen oder natürlichen Ursprungs umfasst.

10. Kaugummi-Zusammensetzung gemäss einem der Ansprüche 1 bis 9, in welcher der Füllstoff in der Grundmasse in einer Menge von 20 bis 35 Gew.%, bezogen auf das Gewicht der Grundmasse, eingeschlossen ist.

11. Kaugummi-Zusammensetzung gemäss einem der Ansprüche 1 bis 10, in welcher der Füllstoff, der in die Gummigrundmasse als eine Komponente nach der Bildung der Grundmasse zugegeben wird, 10 bis 30 Gew.%, bezogen auf das Gewicht der Gummi-Zusammensetzung, umfasst.

12. Kaugummi-Zusammensetzung gemäss einem der Ansprüche 1 bis 11, in welcher die erhaltene Zusammensetzung in Form eines coextrudierten Gummiproduktes vorliegt.

13. Kaugummi-Zusammensetzung gemäss einem der Ansprüche 1 bis 11, in welcher die Zusammensetzung der Kernteil eines coextrudierten Gummis ist.

14. Verfahren zur Herstellung einer Kaugummi-Zusammensetzung mit verringertem Schrumpf und mit guten Filmbildungseigenschaften, dadurch gekennzeichnet, dass man eine Füllstoff enthaltende Nicht-Styrol-Butadien-Grundmasse in einer Menge herstellt, die ausreicht, um 16 bis 30 Gew.% der Gummi-Zusammensetzung auszumachen, und dazu zusätzlich Füllstoff und Nicht-Füllstoff-Komponenten gibt, unter Erhalt einer Kaugummi-Zusammensetzung, die 14 bis 35 Gew.% Füllstoff, bezogen auf die Gummi-Zusammensetzung, enthält.

15. Verfahren gemäss Anspruch 14, in welcher die Grundmasse 20 bis 35 Gew.% Füllstoff, bezogen auf die Grundmasse, enthält.

16. Verfahren gemäss Anspruch 14 oder 15, in welcher der zusätzlich nach der Herstellung der Gummigrundmasse zugegebene Füllstoff 10 bis 30 Gew.% der Gummi-Zusammensetzung umfasst.

17. Kaugummi-Zusammensetzung gemäss einem der Ansprüche 1 bis 13, bei welcher man eine Kraft von nicht mehr als 133,34 N (30 lbs) benötigt, um eine Probe bei Raumtemperatur (24,5°C) mit einer Geschwindigkeit von 50,8 cm/Min. (20 inch/Min.) zu der Hälfte der Originalgrösse von einer ursprünglichen Dicke von 1,27 cm ($\frac{1}{2}$ inch) auf eine Dicke von 0,635 cm ($\frac{1}{4}$ inch) zu komprimieren.

**Patentansprüche für den Vertragsstaat: AT**

1. Verfahren zur Herstellung einer Kaugummi-Zusammensetzung mit verringertem Schrumpf und mit guten Filmbildungseigenschaften, dadurch gekennzeichnet, dass man eine Füllstoff enthaltende Nicht-Styrol-Butadien-Grundmasse in einer Menge herstellt, die ausreicht, um 16 bis 30 Gew.% der Gummi-Zusammensetzung auszumachen, und dazu zusätzlich Füllstoff und nicht-füllende Komponenten gibt, unter Erhalt einer Kaugummi-Zusammensetzung, die 14 bis 35 Gew.% Füllstoff, bezogen auf die Gummi-Zusammensetzung, enthält.

2. Verfahren gemäss Anspruch 1, in welcher die Grundmasse 20 bis 35 Gew.% Füllstoff, bezogen auf die Grundmasse, enthält.

3. Verfahren gemäss Anspruch 1 oder 2, in welcher der zusätzlich nach der Herstellung der Gummigrundmasse zugegebene Füllstoff 10 bis 30 Gew.% der Gummi-Zusammensetzung umfasst.

4. Verfahren gemäss einem der Ansprüche 1 bis 3, bei welchem man eine Kraft von nicht mehr als 133,34 N (30 lbs) benötigt, um eine Probe bei Raumtemperatur (24,5°C) mit einer Geschwindigkeit von 50,8 cm/Min. (20 inch/Min.) zu der Hälfte der Originalgrösse von einer ursprünglichen Dicke von 1,27 cm ($\frac{1}{2}$ inch) auf eine Dicke von 0,635 cm ($\frac{1}{4}$ inch) zu komprimieren.

**Revendications pour les Etats contractants: BE CH DE FR GB IT LI LU NL SE**

1. Composition de chewing-gum présentant de bonne caractéristiques filmogènes et une perte de volume réduite, ladite composition étant essentiellement basée sur une gomme de base contenant une charge minérale inerte, caractérisée par le fait que ladite composition de chewing-gum comprend de 14% à 35% de charge minérale inerte par rapport au poid total de la composition de gomme, et une gomme de base sans styrène-butadiène en une quantité allant de 16% à 30% en poids de la composition de gomme.

2. Composition de chewing-gum selon la revendication 1, dans laquelle la charge est présente en une quantité allant de 16% à 25% de la composition de gomme.

3. Composition de chewing-gum selon la revendication 1 ou 2, dans laquelle la charge est choisie parmi le carbonate de calcium, l'hydroxyde d'aluminium, l'alumine, le carbonate de magnésium, le phosphate dicalcique, le talc ($3MgO \cdot 4SiO_2 \cdot H_2O$), le trisilicate de magnésium, l'hydroxyde de magnésium, le silicate d'aluminium ou le gel de silice.

4. Composition de chewing-gum selon la revendication 3, dans laquelle la charge est le carbonate de calcium.

5. Composition de chewing-gum selon l'une des revendications 1 à 4, dans laquelle la base est une gomme de base sans styrène-butadiène, choisie parmi une base de polyisobutylène, une base de polyisoprène ou une base de copolymère isobutylène-isoprène.

6. Composition de chewing-gum selon la revendication 5, dans laquelle la base est une base de polyisobutylène.

7. Composition de chewing-gum selon l'une des revendications 1 à 6, dans laquelle la gomme de base comprend en outre d'autres substances masticatoires d'origine naturelle, choisies parmi les matières solides du latex de caoutchouc, le chicle, la gomme couronne, le nispero, le rosidinha, le jelutong, le perdare, le perillo, le niger gutta ou le tunu.

8. Composition de chewing-gum selon l'une des revendications 1 à 7, dans laquelle les composants ajoutés après la formation de la gomme de base comprennent en outre un édulcorant choisi parmi le sucre, les hydrolysats d'amidon hydrogénés, les alcools de sucre ou le sirop de glucose, en une quantité allant de 35% à 70% en poids par rapport au poids de ladite composition de gomme.

9. Composition de chewing-gum selon l'une des revendications 1 à 7, qui comprend en outre des édulcorants intenses d'origine synthétique ou naturelle.

10. Composition de chewing-gum selon l'une des revendications 1 à 9, dans laquelle la charge est incluse dans la base en une quantité allant de 20% à 35% en poids pa rapport au poids de la base.

11. Composition de chewing-gum selon l'une des revendications 1 à 10, dans laquelle la charge qui est incluse dans la composition de gomme en tant que composant ajouté après la formation de la base, comprend de 10% à 30% en poids par rapport au poids de ladite composition de gomme.

12. Composition de chewing-gum selon l'une des revendications 1 à 11, dans laquelle la composition résultante se présente sous la forme d'une gomme co-extrudée constituant un produit.

13. Composition de chewing-gum selon l'une des revendications 1 à 11, dans laquelle la composition constitue la partie de coeur d'une gomme co-extrudée.

14. Procédé de préparation d'une composition de chewing-gum à perte de volume réduite, présentant de bonnes caractéristiques filmogènes, caractérisé par le fait qu'on prépare une base sans styrène-butadiène contenant une charge, en une quantité suffisante pour qu'elle constitue de 16 à 30% en poids de la composition de gomme, et qu'on y ajoute une charge additionnelle et des composants qui ne sont pas des charges, pour donner une composition de chewing-gum résultante contenant de 14 à 35% en poids de charge par rapport à la composition de gomme.

15. Procédé selon la revendication 14, dans lequel la base contient de 20 à 35% en poids de charge, par rapport à la base.

16. Procédé selon la revendication 14 ou 15, dans lequel la charge additionnelle qui est ajoutée après la préparation de la gomme de base, comprend de 10 à 30% en poids de la composition de gomme.

17. Composition de chewing-gum selon l'une des revendications 1 à 13, dans laquelle une force ne dépassant pas 133,34 N (30 livres) est requise pour comprimer un échantillon à la température ambiante (24,5°C), à une vitesse de 50,8 cm/min (20 pouces/min), jusqu'à la moitié de sa taille initiale, d'une épaisseur initialement de 1,27 cm ($\frac{1}{2}$ pouce) jusqu'à une épaisseur de 0,635 cm ($\frac{1}{4}$ pouce).

**Revendications pour l'Etat contractant: AT**

1. Procédé de préparation d'une composition de chewing-gum à perte de volume réduite, présentant de bonnes caractéristiques filmogènes, caractérisé par le fait qu'on prépare une base sans styrène-butadiène, contenant une charge, en une quantité suffisante pour qu'elle constitue de 16 à 30% en poids de la composition de gomme, et qu'on y ajoute une charge additionnelle et des composants qui ne sont pas des charges, pour donner une composition de chewing-gum résultante contenant de 14 à 35% en poids de charge par rapport à la composition de gomme.

2. Procédé selon la revendication 1, dans lequel la base contient de 20 à 35% en poids de charge, par rapport à la base.

3. Procédé selon la revendication 1 ou 2, dans lequel la charge additionnelle qui est ajoutée après la préparation de la gomme de base, comprend de 10 à 30% en poids de la composition de gomme.

4. Composition de chewing-gum selon l'une des revendications 1 à 3, dans laquelle une force ne dépassant pas 133,34 N (30 livres) est requise pour comprimer un échantillon à la température ambiante (24,5°C), à une vitesse de 50,8 cm/min (20 pouces/min), jusqu'à la moitié de sa taille initiale, d'une épaisseur initialement de 1,27 cm ($\frac{1}{2}$ pouce) jusqu'à une épaisseur de 0,635 cm ($\frac{1}{4}$ pouce).